# EUROPEAN PATENT APPLICATION

(11) **EP 4 481 887 A1**
(43) Date of publication of application: **25.12.2024**
(21) Application number: 23900805.5
(22) Date of filing: 07.07.2023
(51) Int. Cl.: H01M 10/42, H01M 10/63, H01M 10/615, H01M 10/48

(54) **BATTERY MANAGEMENT DEVICE AND OPERATION METHOD THEREOF**

(30) Priority: 06.12.2022 KR 20220169206
(71) Applicant: LG Energy Solution, Ltd., Seoul 07335 (KR)
(72) Inventor: KIM, Jong Wan, Daejeon 34122 (KR)
(74) Representative: Plasseraud IP
(86) International application number: PCT/KR2023/009689
(87) International publication number: WO 2024/122783

(57) **Abstract**

A battery management apparatus according to an embodiment disclosed herein includes a heating unit including a heater configured to heat a plurality of battery units, an obtaining unit configured to obtain temperature information of a plurality of battery management systems (BMSs) respectively included in the plurality of battery units, and a controller configured to match a plurality of first identification information of the plurality of battery units to a plurality of second identification information of the plurality of BMSs, based on the temperature information and heating information of the heater.

## Description

### [TECHNICAL FIELD]

### CROSS-REFERENCE TO RELATED APPLICATION

This application claims priority to and the benefit of Korean Patent Application No. 10-2022-0169206 filed in the Korean Intellectual Property Office on December 6, 2022, the entire contents of which are incorporated herein by reference.

### TECHNICAL FIELD

Embodiments disclosed herein relate to a battery management apparatus and an operating method thereof.

### [BACKGROUND ART]

Recently, research and development of secondary batteries have been actively performed. Herein, the secondary batteries, which are chargeable/dischargeable batteries, may include all of conventional nickel (Ni)/cadmium (Cd) batteries, Ni/metal hydride (MH) batteries, etc., and recent lithium-ion batteries. Among the secondary batteries, a lithium-ion battery has a much higher energy density than those of the conventional Ni/Cd batteries, Ni/MH batteries, etc. Moreover, the lithium-ion battery may be manufactured to be small and lightweight, such that the lithium-ion battery has been used as a power source of mobile devices, and recently, a use range thereof has been extended to power sources for electric vehicles, attracting attention as next-generation energy storage media.

Furthermore, the secondary battery may be used as a battery pack including a battery module where a plurality of battery cells are connected to one another in series and/or in parallel. The secondary battery may be used as a battery rack including a plurality of battery modules and a rack frame receiving the battery modules.

These batteries may be managed and controlled in terms of states and operations thereof by a battery management system (BMS). The battery management system may be included together with a battery in one device. The battery management system may also manage and control the battery in a state of being spaced apart from a device including the battery.

To normally manage and control the battery, identification information of a particular battery and identification information of the battery management system that manages and controls the particular battery need to be matched and managed. To this end, for example, when the battery management system is included in the battery, it is important to recognize in which battery each battery management system is included.

### [DISCLOSURE]

### [TECHNICAL PROBLEM]

Embodiments disclosed herein aim to provide a battery management apparatus and an operating method thereof in which, based on a plurality of temperature information of each of a plurality of BMSs, identification information of each of the plurality of BMSs and identification information of each of a plurality of battery units are matched to each other and managed.

Embodiments disclosed herein aim to provide a battery management apparatus and an operating method thereof in which heating of a particular BMS is performed using a heater and identification information of a battery unit, associated with position information where the heater performs heating, and identification information of the particular BMS are matched to each other and managed.

Technical problems of the embodiments disclosed herein are not limited to the above-described technical problems, and other unmentioned technical problems would be clearly understood by one of ordinary skill in the art from the following description.

### [TECHNICAL SOLUTION]

A battery management apparatus according to an embodiment disclosed herein includes a heating unit including a heater configured to heat a plurality of battery units, an obtaining unit configured to obtain temperature information of a plurality of battery management systems (BMSs) respectively included in the plurality of battery units, and a controller configured to match a plurality of first identification information of the plurality of battery units to a plurality of second identification information of the plurality of BMSs, based on the temperature information of the plurality of BMSs and heating information of the heater.

In the battery management apparatus according to an embodiment disclosed herein, the heater may include a plurality of heaters, and each of the plurality of heaters may be positioned in each of regions divided according to positions of the plurality of battery units.

In the battery management apparatus according to an embodiment disclosed herein, the heater may be configured to heat the plurality of battery units while moving between regions divided according to positions of the plurality of battery units.

In the battery management apparatus according to an embodiment disclosed herein, the controller may be further configured to identify a position heated by the heater based on the heating information and identify a battery unit positioned most adjacent to the identified position among the plurality of battery units.

In the battery management apparatus according to an embodiment disclosed herein, the controller may be further configured to identify a BMS having a highest temperature among the plurality of BMSs based on the temperature information during heating by the heater at the identified position and match identification information of the identified BMS to identification information of the identified battery unit.

In the battery management apparatus according to an embodiment disclosed herein, the heater may be disposed adjacent to upper ends of the plurality of battery units when performing heating, and the plurality of BMSs may be respectively disposed at the upper ends of the plurality of battery units.

A battery management method according to an embodiment disclosed herein includes heating one of a plurality of battery units by using a heater, obtaining temperature information of a plurality of battery management systems (BMSs) respectively included in the plurality of battery units, and matching a plurality of first identification information of the plurality of battery units to a plurality of second identification information of the plurality of BMSs, based on the temperature information of the plurality of BMSs and heating information of the heater.

In the battery management method according to an embodiment disclosed herein, the heater may include a plurality of heaters, and each of the plurality of heaters may be positioned in each of regions divided according to positions of the plurality of battery units.

In the battery management method according to an embodiment disclosed herein, the heater may be configured to heat the plurality of battery units while moving between regions divided according to positions of the plurality of battery units.

In the battery management method according to an embodiment disclosed herein, the matching of the plurality of first identification information to the plurality of second identification information may include identifying a position heated by the heater based on the heating information and identifying a battery unit positioned most adjacent to the identified position among the plurality of battery units.

In the battery management method according to an embodiment disclosed herein, the matching of the plurality of first identification information to the plurality of second identification information may include identifying a BMS having a highest temperature among the plurality of BMSs based on the temperature information during heating by the heater at the identified position and matching identification information of the identified BMS to identification information of the identified battery unit.

In the battery management method according to an embodiment disclosed herein, the heater may be disposed adjacent to upper ends of the plurality of battery units when performing heating, and the plurality of BMSs may be respectively disposed at the upper ends of the plurality of battery units.

A battery management apparatus according to an embodiment disclosed herein includes an obtaining unit configured to obtain temperature information of a plurality of battery management systems (BMSs) respectively included in a plurality of battery units and heating information of a heater configured to heat the plurality of battery units and a controller configured to match a plurality of first identification information of the plurality of battery units to a plurality of second identification information of the plurality of BMSs, based on the temperature information of the plurality of BMSs and the heating information of the heater.

In the battery management apparatus according to an embodiment disclosed herein, the heater may include a plurality of heaters, and each of the plurality of heaters may be positioned in each of regions divided according to positions of the plurality of battery units.

In the battery management apparatus according to an embodiment disclosed herein, the heater may be configured to heat the plurality of battery units while moving between regions divided according to positions of the plurality of battery units.

In the battery management apparatus according to an embodiment disclosed herein, the controller may be further configured to identify a position heated by the heater based on the heating information and identify a battery unit positioned most adjacent to the identified position among the plurality of battery units.

In the battery management apparatus according to an embodiment disclosed herein, the controller may be further configured to identify a BMS having a highest temperature among the plurality of BMSs based on the temperature information during heating by the heater at the identified position and match identification information of the identified BMS to identification information of the identified battery unit.

In the battery management apparatus according to an embodiment disclosed herein, the heater may be disposed adjacent to upper ends of the plurality of battery units when performing heating, and the plurality of BMSs may be respectively disposed at the upper ends of the plurality of battery units.

### [ADVANTAGEOUS EFFECTS]

The battery management apparatus and the operating method thereof according to various embodiments disclosed herein may match the identification information of the plurality of BMSs and the identification information of the plurality of battery units to each other and manage them.

The battery management apparatus and the operating method thereof according to various embodiments disclosed herein may use a method of directly heating a particular BMS by using a heater and matching the heated BMS and a battery unit including the same to each other, thereby improving the efficiency of identification information matching and management.

The effects of the battery abnormality diagnosis apparatus and the operating method thereof according to the disclosure of the present document are not limited to the effects mentioned above, and other effects not mentioned will be clearly understood by those of ordinary skill in the art according to the disclosure of the present document.

Moreover, various effects recognized directly or indirectly from the disclosure may be provided.

### [DESCRIPTION OF DRAWINGS]

FIG. 1 is a block diagram of a battery management apparatus according to an embodiment.
FIG. 2 is a view for describing an example where, when a heating unit of a battery management apparatus according to an embodiment includes at least one heater that is fixed at a designated position to perform heating, the heating unit heats a battery unit.
FIG. 3 is a view for describing an example where, when a heating unit of a battery management apparatus according to an embodiment includes at least one heater that moves while performing heating, the heating unit heats a battery unit.
FIG. 4 is an operating flowchart of a battery management apparatus according to an embodiment.

### [MODE FOR INVENTION]

Hereinafter, various embodiments of the present disclosure will be disclosed with reference to the accompanying drawings. However, the description is not intended to limit the present disclosure to particular embodiments, and it should be construed as including various modifications, equivalents, and/or alternatives according to the embodiments of the present disclosure.

It should be appreciated that various embodiments of the present document and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "1^{st}", "2^{nd}," "first", "second", "A", "B", "(a)", or "(b)" may be used to simply distinguish a corresponding component from another, and does not limit the components in other aspect (e.g., importance or order), unless mentioned otherwise.

Herein, it is to be understood that when an element (e.g., a first element) is referred to, with or without the term "operatively" or "communicatively", as "connected with", "coupled with", or "linked with", or "coupled to" or "connected to" to another element (e.g., a second element), it means that the element may be connected with the other element directly (e.g., wiredly), wirelessly, or via a third element.

According to an embodiment of the disclosure, a method according to various embodiments of the disclosure disclosed herein may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store, or between two user devices directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

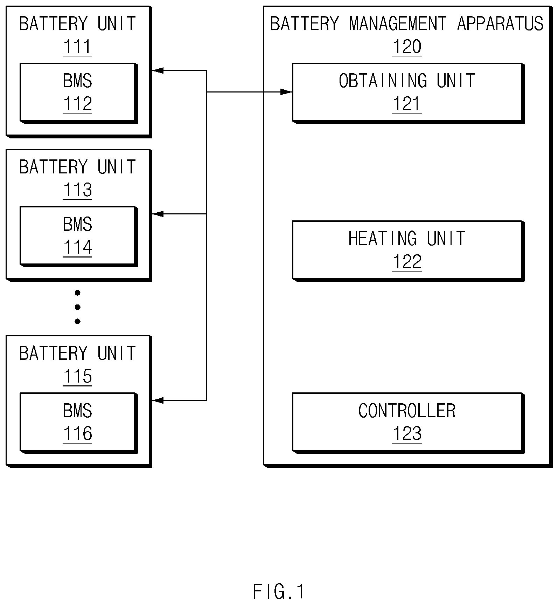

FIG. 1 is a block diagram of a battery management apparatus according to an embodiment.

Referring to FIG. 1, a battery management apparatus 120 may include an obtaining unit 121, a heating unit 122, and/or a controller 123. According to an embodiment, the battery management apparatus 120 shown in FIG. 1 may further include at least one component (e.g., a display, an input device, or an output device) in addition to components shown in FIG. 1.

According to an embodiment, the obtaining unit 121 may include a communication circuit that wiredly and/or wirelessly connects the battery management apparatus 120 to a plurality of battery units 111, 113, and 115. In an embodiment, each of the plurality of battery units 111, 113, and 115 may be a battery cell, a battery module, a battery pack, or a battery rack.

According to an embodiment, the obtaining unit 121 may establish a wired communication channel and/or a wireless communication channel with a plurality of battery management systems (BMSs) 112, 114, and 116 respectively included in the plurality of battery units 111, 113, and 115. The obtaining unit 121 may transmit and receive data to and from the plurality of battery units 111, 113, and 115 through the wired communication channel and/or the wireless communication channel.

According to another embodiment, the obtaining unit 121 may establish the wired communication channel and/or the wireless communication channel with a designated medium through a communication circuit. In an embodiment, when the plurality of battery units 111, 113, and 115 are a plurality of battery modules, the obtaining unit 121 may establish the wired communication channel and/or the wireless communication channel with a pack BMS included in the battery pack including the plurality of battery units 111, 113, and 115. In this case, the obtaining unit 121 may receive data collected by the pack BMS from the plurality of battery units 111, 113, and 115 from the pack BMS through the established wired communication channel and/or wireless communication channel.

According to an embodiment, the obtaining unit 121 may obtain first identification information of each of the plurality of battery units 111, 113, and 115 and/or second identification information of each of the plurality of BMSs 112, 114, and 116 respectively included in the plurality of battery units 111, 113, and 115. Herein, the first identification information may include number information and/or identification (ID) information indicating each of the plurality of battery units 111, 113, and 115. Herein, the second identification information may include number information and/or ID information indicating each of the plurality of BMSs 112, 114, and 116. According to an embodiment, the obtaining unit 121 may obtain the first identification information and/or the second identification information through the communication circuit.

According to an embodiment, the obtaining unit 121 may obtain temperature information of the plurality of BMSs 112, 114, and 116. Herein, the temperature information of the plurality of BMSs 112, 114, and 116 may include substrate temperature information of the plurality of BMSs 112, 114, and 116.

According to an embodiment, the obtaining unit 121 may obtain the temperature information from the plurality of BMSs 112, 114, and 116 through the communication circuit. According to another embodiment, the obtaining unit 121 may include a temperature sensor capable of measuring temperatures of the plurality of BMSs. In this case, the obtaining unit 121 may obtain the temperature information by measuring a temperature of each of the plurality of BMSs 112, 114, and 116 through the temperature sensor.

According to an embodiment, the heating unit 122 may include a heater that heats the plurality of battery units 111, 113, and 115.

In an embodiment, the heater may include a plurality of heaters. In this case, the plurality of heaters may be located respectively in regions divided according to positions of the plurality of battery units 111, 113, and 115. In an embodiment, the heating unit 122 may control a designated heater among the plurality of heaters to perform heating. In this case, the battery unit 111, 113, or 115 positioned in a region where the designated heater is located may perform heating.

In an embodiment, the heater may perform heating while moving between the regions divided according to the positions of the plurality of battery units 111, 113, and 115. In an embodiment, the heating unit 122 may control the heater to move to the region corresponding to the designated battery unit 111, 113, or 115 and perform heating. In this case, the battery unit 111, 113, or 115 positioned in a region where the heater performs heating may be heated.

According to an embodiment, the heater, when performing heating, may be arranged adjacent to upper ends of the plurality of battery units 111, 113, and 115. In an embodiment, the plurality of BMSs 112, 114, and 116 may be arranged at the upper ends of the plurality of battery units 111, 113, and 115. The heating unit 122 may efficiently raise temperatures of the plurality of BMSs 112, 114, and 116 by directly heating the plurality of BMSs 112, 114, and 116 arranged at the upper ends of the plurality of battery units 111, 113, and 115.

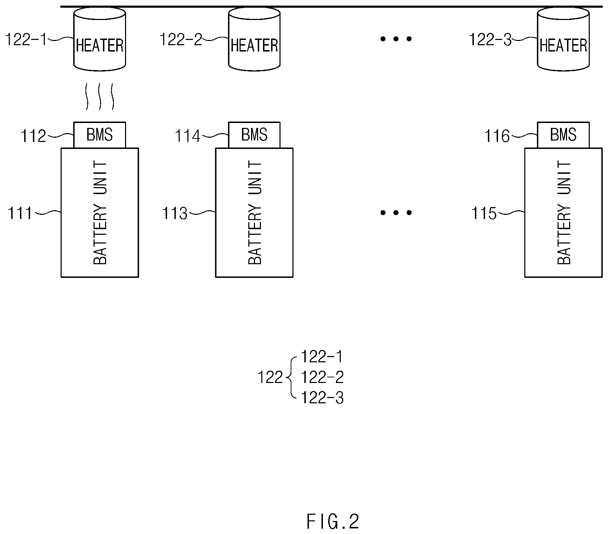

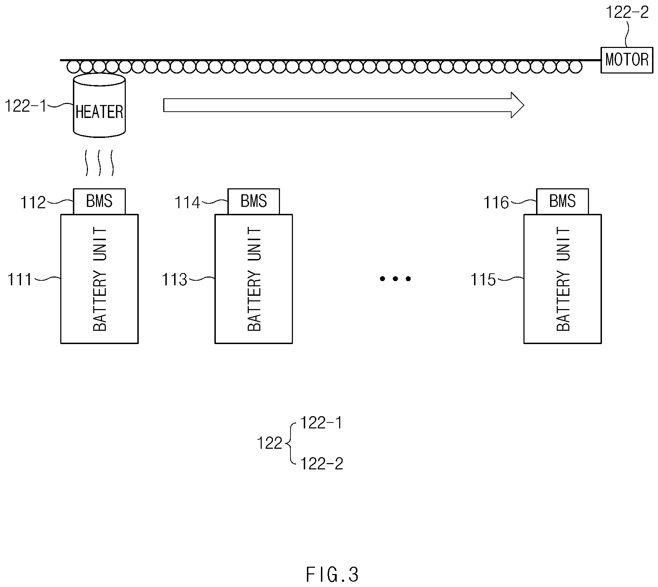

Various embodiments where the heating unit 122 heats the plurality of battery units 111, 113, and 115 will be described in more detail with reference to FIGS. 2 and 3.

The above-described heating unit 122 may be included in the battery management apparatus 120 and may be configured as another device outside the battery management apparatus 120. When the heating unit 122 is configured as another device outside the battery management apparatus 120, the obtaining unit 121 may establish the wired communication channel and/or the wireless communication channel with the heating unit 122 through the communication circuit. The obtaining unit 121 may obtain heating information of a heater included in the heating unit 122 from the heating unit 122 through the wired communication channel and/or the wireless communication channel.

According to an embodiment, the controller 123 may match a plurality of first identification information of the plurality of battery units 111, 113, and 115 to a plurality of second identification information of the plurality of BMSs 112, 114, and 116. According to an embodiment, the controller 123 may match the plurality of first identification information to the plurality of second identification information based on the temperature information of the plurality of BMSs 112, 114, and 116, obtained by the obtaining unit 121, and the heating information of the heater included in the heating unit 122. Herein, the heating information of the heater may include various information (e.g., time and position) related to heating performed by the heater.

According to an embodiment, the controller 123 may identify a position at which the heater performs heating, based on the heating information of the heater. The controller 123 may identify a battery unit positioned most adj acent to the position at which the heater performs heating.

According to an embodiment, the controller 123 may match identification information of the BMS 112, 114, or 116 having the highest temperature among the plurality of BMSs 112, 114, and 116 and identification information of the battery unit 111, 113, or 115 arranged at a position at which the heating unit 122 performs heating to each other and manage them. In an embodiment, the controller 123 may identify the BMS 112, 114, or 116 having the highest temperature based on the temperature information during heating performed by the heater at the designated position. In an embodiment, the controller 123 may match the identification information of the identified BMS 112, 114, or 116 and the identification information of the battery unit positioned most adjacent to the position at which the heater performs heating.

FIG. 2 is a view for describing an example where, when a heating unit of a battery management apparatus according to an embodiment includes at least one heater that is fixed at a designated position to perform heating, the heating unit heats a battery unit. FIG. 2 will be described using components of FIG. 1.

Referring to FIG. 2, the heating unit 122 may include a first heater 122-1, a second heater 122-2, and a third heater 122-3.

According to an embodiment, the first heater 122-1, the second heater 122-2, and the third heater 122-3 may be located respectively in regions divided according to the positions of the plurality of battery units 111, 113, and 115. For example, the first heater 122-1 may be positioned in a region where the first battery unit 111 is disposed. The second heater 122-2 may be positioned in a region where the second battery unit 113 is disposed. The third heater 122-3 may be positioned in a region where the third battery unit 115 is disposed.

According to an embodiment, the first heater 122-1, the second heater 122-2, and the third heater 122-3 may be located respectively at the upper ends of the plurality of battery units 111, 113, and 115 to heat the upper ends of the plurality of battery units 111, 113, and 115. In an embodiment, the plurality of BMSs 112, 114, and 116 may be arranged at the upper ends of the plurality of battery units 111, 113, and 115 so as to be adjacent to the at least one heater.

According to an embodiment, the heating unit 122 may control the first heater 122-1 to perform heating. In this case, the first battery unit 111 disposed in a region where the first heater 122-1 is located may be heated. The controller 123 may match identification information of the first BMS 112 having the highest temperature among the plurality of BMSs 112, 114, and 116 to identification information of the first battery unit 111 positioned most adjacent to the position heated by the first heater 122-1.

FIG. 3 is a view for describing an example where, when a heating unit of a battery management apparatus according to an embodiment includes at least one heater that moves while performing heating, the heating unit heats a battery unit. FIG. 3 will be described using components of FIG. 1.

Referring to FIG. 3, the heating unit 122 may include the heater 122-1 and a motor 122-2.

In an embodiment, the heating unit 122 may control the heater 122-1 to perform heating while moving between the regions divided according to the positions of the plurality of battery units 111, 113, and 115. According to an embodiment, the heating unit 122 may control the heater 122-1 to move between the regions divided according to the positions of the plurality of battery units 111, 113, and 115, through the motor 122-2.

According to an embodiment, the heater 122-1 may be located respectively at the upper ends of the plurality of battery units 111, 113, and 115 to heat the upper ends of the plurality of battery units 111, 113, and 115. In an embodiment, the plurality of BMSs 112, 114, and 116 may be arranged at the upper ends of the plurality of battery units 111, 113, and 115 so as to be adjacent to the at least one heater.

According to an embodiment, the heating unit 122 may control the heater 122-1 to move to the region where the first battery unit 111 is disposed and to perform heating. The controller 123 may match identification information of the first BMS 112 having the highest temperature among the plurality of BMSs 112, 114, and 116 to identification information of the first battery unit 111 positioned most adjacent to the position heated by the heater 122-1.

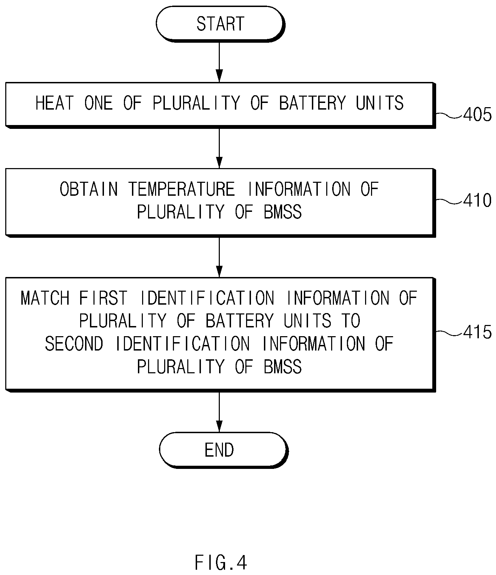

FIG. 4 is an operating flowchart of a battery management apparatus according to an embodiment. FIG. 4 will be described using components of FIG. 1.

The embodiment shown in FIG. 4 may be an example, and an order of operations according to various embodiments of the present disclosure may be different from that shown in FIG. 4, and some operations shown in FIG. 4 may be omitted, the order of the operations may be changed, or the operations may be merged.

Referring to FIG. 4, in operation 405, the battery management apparatus 120 may heat the BMS 111, 113, or 115 of one of the plurality of battery units 111, 113, and 115. According to an embodiment, the battery management apparatus 120 may heat the BMS 111, 113, or 115 of one of the plurality of battery units 111, 113, and 115, by using the heater.

In an embodiment, the heater may include a plurality of heaters. In this case, the plurality of heaters may be located respectively in regions divided according to positions of the plurality of battery units 111, 113, and 115. In an embodiment, the battery management apparatus 120 may control a designated heater among the plurality of heaters to perform heating. In this case, the battery unit 111, 113, or 115 positioned in a region where the designated heater is located may perform heating.

In an embodiment, the heater may perform heating while moving between the regions divided according to the positions of the plurality of battery units 111, 113, and 115. In an embodiment, the battery management apparatus 120 may control the heater to move to the region corresponding to the designated battery unit 111, 113, or 115 and perform heating. In this case, the battery unit 111, 113, or 115 positioned in a region where the heater performs heating may be heated.

According to an embodiment, the heater, when performing heating, may be arranged adjacent to upper ends of the plurality of battery units 111, 113, and 115. In an embodiment, the plurality of BMSs 112, 114, and 116 may be arranged at the upper ends of the plurality of battery units 111, 113, and 115. The battery management apparatus 120 may efficiently raise temperatures of the plurality of BMSs 112, 114, and 116 by directly heating the plurality of BMSs 112, 114, and 116 arranged at the upper ends of the plurality of battery units 111, 113, and 115.

In operation 410, the battery management apparatus 120 may obtain temperature information of the plurality of BMSs 112, 114, and 116. Herein, the temperature information of the plurality of BMSs 112, 114, and 116 may include substrate temperature information of the plurality of BMSs 112, 114, and 116.

In operation 415, the battery management apparatus 120 may match a plurality of first identification information of the plurality of battery units 111, 113, and 115 to a plurality of second identification information of the plurality of BMSs 112, 114, and 116. According to an embodiment, the battery management apparatus 120 may match the plurality of first identification information and the plurality of second identification information to each other, based on the temperature information of the plurality of BMSs 112, 114, and 116, obtained in operation 410, and the heating information of the heater that performs heating in operation 405. Herein, the heating information of the heater may include various information (e.g., time and position) related to heating performed by the heater.

According to an embodiment, the battery management apparatus 120 may identify a position at which the heater performs heating, based on the heating information of the heater. The battery management apparatus 120 may identify a battery unit positioned most adjacent to the position at which the heater performs heating.

According to an embodiment, the battery management apparatus 120 may match identification information of the BMS 112, 114, or 116 having the highest temperature among the plurality of BMSs 112, 114, and 116 and identification information of the battery unit 111, 113, or 115 arranged at a position at which the heating unit 122 performs heating to each other and manage them. In an embodiment, the battery management apparatus 120 may identify the BMS 112, 114, or 116 having the highest temperature based on the temperature information during heating performed by the heater at the designated position. In an embodiment, the battery management apparatus 120 may match the identification information of the identified BMS 112, 114, or 116 and the identification information of the battery unit positioned most adjacent to the position at which the heater performs heating.

Terms such as "include", "constitute" or "have" described above may mean that the corresponding component may be inherent unless otherwise stated, and thus should be construed as further including other components rather than excluding other components. All terms including technical or scientific terms have the same meanings as those generally understood by those of ordinary skill in the art to which the embodiments disclosed herein pertain, unless defined otherwise. The terms used generally like terms defined in dictionaries should be interpreted as having meanings that are the same as the contextual meanings of the relevant technology and should not be interpreted as having ideal or excessively formal meanings unless they are clearly defined in the present document.

## Claims

1. A battery management apparatus comprising:
a heating unit comprising a heater configured to heat a plurality of battery units;
an obtaining unit configured to obtain temperature information of a plurality of battery management systems (BMSs) respectively included in the plurality of battery units; and
a controller configured to match a plurality of first identification information of the plurality of battery units to a plurality of second identification information of the plurality of BMSs, based on the temperature information of the plurality of BMSs and heating information of the heater.

2. The battery management apparatus of claim 1, wherein the heater comprises a plurality of heaters, and each of the plurality of heaters is positioned in each of regions divided according to positions of the plurality of battery units.

3. The battery management apparatus of claim 1, wherein the heater is configured to heat the plurality of battery units while moving between regions divided according to positions of the plurality of battery units.

4. The battery management apparatus of claim 1, wherein the controller is further configured to:
identify a position heated by the heater based on the heating information; and
identify a battery unit positioned most adjacent to the identified position among the plurality of battery units.

5. The battery management apparatus of claim 4, wherein the controller is further configured to:
identify a BMS having a highest temperature among the plurality of BMSs based on the temperature information during heating by the heater at the identified position; and
match identification information of the identified BMS to identification information of the identified battery unit.

6. The battery management apparatus of claim 1, wherein the heater is disposed adjacent to upper ends of the plurality of battery units when performing heating, and the plurality of BMSs are respectively disposed at the upper ends of the plurality of battery units.

7. A battery management method comprising:
heating one of a plurality of battery units by using a heater;
obtaining temperature information of a plurality of battery management systems (BMSs) respectively included in the plurality of battery units; and
matching a plurality of first identification information of the plurality of battery units to a plurality of second identification information of the plurality of BMSs, based on the temperature information of the plurality of BMSs and heating information of the heater.

8. The battery management method of claim 7, wherein the heater comprises a plurality of heaters, and each of the plurality of heaters is positioned in each of regions divided according to positions of the plurality of battery units.

9. The battery management method of claim 7, wherein the heater is configured to heat the plurality of battery units while moving between regions divided according to positions of the plurality of battery units.

10. The battery management method of claim 7, wherein the matching of the plurality of first identification information to the plurality of second identification information comprises:
identifying a position heated by the heater based on the heating information; and
identifying a battery unit positioned most adjacent to the identified position among the plurality of battery units.

11. The battery management method of claim 10, wherein the matching of the plurality of first identification information to the plurality of second identification information comprises:
identifying a BMS having a highest temperature among the plurality of BMSs based on the temperature information during heating by the heater at the identified position; and
matching identification information of the identified BMS to identification information of the identified battery unit.

12. The battery management method of claim 7, wherein the heater is disposed adjacent to upper ends of the plurality of battery units when performing heating, and the plurality of BMSs are respectively disposed at the upper ends of the plurality of battery units.

13. A battery management apparatus comprising:
an obtaining unit configured to obtain temperature information of a plurality of battery management systems (BMSs) respectively included in a plurality of battery units and heating information of a heater configured to heat the plurality of battery units; and
a controller configured to match a plurality of first identification information of the plurality of battery units to a plurality of second identification information of the plurality of BMSs, based on the temperature information of the plurality of BMSs and the heating information of the heater.

14. The battery management apparatus of claim 13, wherein the heater comprises a plurality of heaters, and each of the plurality of heaters is positioned in each of regions divided according to positions of the plurality of battery units.

15. The battery management apparatus of claim 13, wherein the heater is configured to heat the plurality of battery units while moving between regions divided according to positions of the plurality of battery units.

16. The battery management apparatus of claim 13, wherein the controller is further configured to:
identify a position heated by the heater based on the heating information; and
identify a battery unit positioned most adjacent to the identified position among the plurality of battery units.

17. The battery management apparatus of claim 16, wherein the controller is further configured to:
identify a BMS having a highest temperature among the plurality of BMSs based on the temperature information during heating by the heater at the identified position; and
match identification information of the identified BMS to identification information of the identified battery unit.

18. The battery management apparatus of claim 13, wherein the heater is disposed adjacent to upper ends of the plurality of battery units when performing heating, and the plurality of BMSs are respectively disposed at the upper ends of the plurality of battery units.
